# EUROPÄISCHE PATENTSCHRIFT

(11) **EP 3 567 703 B1**
(45) Veröffentlichungstag und Bekanntmachung des Hinweises auf die Patenterteilung: **06.10.2021**
(21) Anmeldenummer: 19167736.8
(22) Anmeldetag: 08.04.2019
(51) Int. Cl.: H02K 3/50, H02K 5/22

(54) **STATOR FÜR EINE ELEKTRISCHE MASCHINE UND HERSTELLUNGSVERFAHREN**
STATOR FOR ELECTRICAL MACHINE AND METHOD FOR PRODUCING SAME
STATOR POUR UNE MACHINE ÉLECTRIQUE ET PROCÉDÉ DE FABRICATION

(30) Priorität: 09.05.2018 DE 102018207224
(43) Veröffentlichungstag der Anmeldung: 13.11.2019
(73) Patentinhaber: VOLKSWAGEN AKTIENGESELLSCHAFT, 38440 Wolfsburg (DE)
(72) Erfinder: Krabus, Stefan, 34225 Baunatal (DE); Leberle, Matthias, 34131 Kassel (DE); Bartholmai, Dirk, 34326 Morschen (DE)

(56) Entgegenhaltungen:
- WO-A1-2017/118516
- JP-A- 2009 290 921
- US-A1- 2016 036 187
- US-A1- 2017 250 588

## Beschreibung

Die Erfindung betrifft einen Stator für eine elektrische Maschine gemäß Anspruch 1 sowie ein Verfahren zur Herstellung eines Stators einer elektrischen Maschine gemäß Anspruch 7.

### Stand der Technik

Grundsätzlich sind Statoren aus dem Stand der Technik bekannt, die eine Vielzahl von Haarnadelleitern umfassen. Diese Haarnadelleiter sind miteinander verbunden, sodass Statorwicklungen ausgebildet sind. Über Stromübertragungselemente kann eine an den Stromübertragungselementen anliegende Spannung abgegriffen werden. Ferner ist es bekannt, dass ein Stator ein Verbindungselement zur Verbindung der Statorwicklungen zu einer Schaltung sowie Isolationselemente umfasst. Allerdings ist es im Stand der Technik üblich, die Stromübertragungselemente und die Isolationselemente radial anzuordnen. Ferner weisen die Stromübertragungselemente im Stand der Technik Kabelschuhe auf, die ein separat anzubindendes stromübertragendes Element darstellen. Zudem werden diverse Schweiß-, Löt-, oder Crimpprozesse an unterschiedlichen Stellen im Stator verwendet, was den Herstellungsprozess verkompliziert.

Die WO 2017/118516 A1 offenbart einen Stator einer elektrischen Maschine mit einem ringförmigen Statorblechpaket, an dem mittels Wickelkörpern Statorspulen mit Spulenenden angeordnet sind, welche mit einer Verschaltungseinrichtung verschaltet sind.

Die JP 2009 290021 A offenbart eine Leiterplatte, ein Herstellungsverfahren zur Herstellung der Leiterplatte sowie eine elektronische Maschine.

In der US 2016/026187 A1 ist eine Verbindungsträgeranordnung für eine Statoranordnung offenbart, die dazu dient, elektrische Überbrückungsdrähte einer elektrischen Maschine zu sichern.

### Darstellung der Erfindung: Aufgabe, Lösung, Vorteile

Aufgabe der vorliegenden Erfindung ist es, einen Stator für eine elektrischen Maschine derart weiterzuentwickeln, dass der vom Stator eingenommene Bauraum möglichst minimal gehalten wird. Ferner soll die Anzahl von Bauteilen reduziert werden und der Herstellungsprozess des Stators vereinfacht werden.

Die oben genannte Aufgabe wird durch einen Stator für eine elektrische Maschine gelöst, der eine Vielzahl von Haarnadelleitern umfasst. Unter dem Begriff "Haarnadelleiter" ist insbesondere ein Hairpin, vorzugsweise ein U-Pin, zu verstehen. Insbesondere umfasst der Stator einen Wickelkörper, umfassend ein Statorblechpaket mit einer Vielzahl von Statornuten, in die die Haarnadelleiter eingebracht sind.

Die Haarnadelleiter sind derart miteinander verbunden, dass drei Statorwicklungen ausgebildet sind. Dabei können die Haarnadelleiter in Parallelschaltung und/oder Reihenschaltung angeordnet sein. Vorzugsweise weist jede Statorwicklung mehrere Reihenschaltungen auf, die parallel geschaltet sind. Jede Statorwicklung weist vorzugsweise ein erstes Ende und ein zweites Ende auf. Diese Enden sind vorzugsweise die jeweiligen Enden der Parallelschaltung.

Der Stator umfasst Stromübertragungselemente zum Übertragen von Strom. Jedem Stromübertragungselement ist eine Statorwicklung zugeordnet. Insbesondere ist jedem Stromübertragungselement eine Phase zugeordnet. Unter dem Begriff "Phase" ist insbesondere die am Stromübertragungselement anliegende Spannung zu verstehen, die mittels des Stromübertragungselementes abgegriffen werden kann, beispielsweise zum Anschluss an eine Leistungselektronik. Die Stromübertragungselemente erfüllen somit eine Schnittstellenfunktion. Die Phasen sind je um 120 Winkelgrad versetzte, sinusförmige Spannungen eines Drehstromsystems und werden mit U, V und W bezeichnet.

Der Stator umfasst ein Verbindungselement zur Verbindung der Statorwicklungen zu einer Schaltung. Insbesondere ist das Verbindungselement dazu geeignet, die Statorwicklungen zu einer Sternschaltung und/oder einer Dreieckschaltung zu verbinden. Vorzugsweise ist das Verbindungselement dazu ausgebildet, einen Sternpunkt einer Sternschaltung zu bilden. Das Verbindungselement ist insbesondere als Kontaktbrücke ausgebildet. Das Verbindungselement ist vorzugsweise als Sternschiene ausgebildet.

Ferner weist der Stator Isolationselemente auf, wobei das Verbindungselement in axialer Richtung des Stators beidseitig durch mindestens ein Isolationselement isoliert ist. Mindestens ein erstes Isolationselement ist an einem ersten axialen Ende des Verbindungselementes zur Isolation gegenüber den Stromübertragungselementen ausgebildet, wobei mindestens ein zweites Isolationselement an einem zweiten axialen Ende des Verbindungselementes zur Isolation gegenüber Endbereichen von Haarnadelleitern ausgebildet ist. In anderen Worten ist an beiden axialen Enden des Verbindungselementes mindestens ein Isolationselement angeordnet, das das Verbindungselement in axialer Richtung gegenüber anderen leitenden Elementen des Stators, insbesondere den Stromübertragungselementen und Endbereichen von Haarnadelleitern, isoliert.

Bei einer elektrischen Maschine handelt es sich insbesondere um eine Drehfeldmaschine, wie beispielsweise ein Motor oder ein Generator. Insbesondere kann unter dem Begriff ein elektrischer Antrieb gemeint sein.

Das zweite Isolationselement ist insbesondere stirnseitig am Wickelkörper des Stators angeordnet, gegebenenfalls in Kombination mit weiteren Isolationselementen. In axialer Richtung wegführend vom Wickelkörper folgt das Verbindungselement und im Anschluss das erste Isolationselement, und wieder im Anschluss am weitesten vom Wickelkörper entfernt, die Stromübertragungselemente. Dieser Bereich an der Stirnseite des Wickelkörpers wird insbesondere Wickelkopfbereich genannt. Das zweite Isolationselement, das Verbindungselement, das erste Isolationselement und die Stromübertragungselemente sind somit in axialer Richtung gestapelt angeordnet.

Mindestens ein Isolationselement ist schienenförmig ausgebildet und erstreckt sich in Umfangsrichtung. Das mindestens eine Isolationselement, vorzugsweise alle Isolationselemente, und/oder das Verbindungselement erstreckt sich nicht vollumfänglich in Umfangsrichtung, sondern erstreckt sich vorzugsweise nur über einen Winkelsektor, d.h. nur einen Abschnitt, des Umfangs, der vorzugweise unter 180°, vorzugsweise unter 90°, beträgt.

Insbesondere sind alle Isolationselemente, insbesondere das erste Isolationselement und das zweite Isolationselement, schienenförmig ausgebildet.

Die Stromübertragungselemente sind insbesondere als Kontaktschienen ausgebildet. In anderen Worten sind die Stromübertragungselemente jeweils als Stromschiene ausgebildet. Die Stromübertragungselemente weisen jeweils mindestens einen schienenförmigen Bereich und einen Abgreifbereich zum Abgreifen einer an dem Stromübertragungselement anliegenden Spannung auf. Bei der am Stromübertragungselement anliegenden Spannung handelt es sich insbesondere um eine Phase des Stators, im Detail eine der Phasen U, V oder W.

Vorzugsweise weisen die Stromübertragungselemente jeweils zwei schienenförmige Bereiche auf, die sich in Umfangsrichtung des Stators erstrecken. Der Abgreifbereich steht in axialer Richtung von dem mindestens einen schienenförmigen Bereich hervor. Insbesondere sind der mindestens eine schienenförmige Bereich, vorzugsweise die zwei schienenförmigen Bereiche, und der Abgreifbereich einstückig gebildet. Der Abgreifbereich umfasst vorzugsweise eine Anschlussöse.

Bei dem Abgreifbereich handelt es sich insbesondere um keinen Kabelschuh. Insbesondere umfasst der gesamte Stator keinen Kabelschuh. Dies hat den immensen Vorteil, dass ein ansonsten extra anzubindendes stromübertragendes Element, das heißt der Kabelschuh, in Kontaktschienen eingebunden werden muss. Durch die einstückige Ausführung reduzieren sich somit die Bauteile des vorliegenden Stators und die notwendigen Fügeprozesse zum Herstellen des Stators.

Insbesondere umfassen die Stromübertragungselemente sich in axialer Richtung erstreckende Anschlussbereiche zum Anschließen mindestens eines Endbereiches eines Haarnadelleiters einer Statorwicklung. Insbesondere sind die Anschlussbereiche in dem mindestens einen schienenförmigen Bereich des Stromübertragungselementes angeordnet. Die schienenförmigen Bereiche des Stromübertragungselementes dienen somit einerseits zum Anschließen mindestens eines Endbereiches eines Haarnadelleiters einer Statorwicklung und andererseits zur Befestigung des Stromübertragungselementes am stirnseitigen Ende des Wickelkörpers. Insbesondere weist jeder Anschlussbereich mindestens einen Anschlusssteg auf. Der Anschlusssteg erstreckt sich in axialer Richtung in Form eines Steges, sodass eine flächige Verbindung zwischen dem Anschlusssteg und einem Endbereich eines Haarnadelleiters zur entsprechenden Verbindung hergestellt werden kann. Im Detail erstreckt sich der mindestens eine Anschlusssteg ausgehend von einem schienenförmigen Bereich in axialer Richtung. Vorzugsweise erstreckt sich der Anschlusssteg ausgehend vom schienenförmigen Bereich zunächst in radialer Richtung, um sich durch eine Krümmung anschließend in axialer Richtung zu erstrecken.

Vorzugsweise weist jeder Anschlussbereich mehrere Anschlussstege, insbesondere vorzugsweise genau zwei Anschlussstege auf, wobei jeder Anschlusssteg zum Anschließen genau eines Endbereiches eines Haarnadelleiters ausgebildet ist.

Vorteilhafterweise weist das Stromübertragungselement in jedem schienenförmigen Bereich mindestens einen Anschlussbereich auf, insbesondere genau einen Anschlussbereich, umfassend vorzugsweise genau zwei Anschlussstege. Insgesamt können somit jeweils ein Endbereich von vier Haarnadelleitern am Stromübertragungselement angeschlossen werden. Jedes Stromübertragungselement ist mit genau einer Statorwicklung, und zwar dem jeweiligen ersten Ende der Statorwicklung, verbunden.

Erfindungsgemäß umfasst das Verbindungselement sich in axialer Richtung erstreckende Anschlussbereiche zum Anschließen mindestens eines Endbereiches eines Haarnadelleiters jeder Statorwicklung. Das Verbindungselement umfasst vorzugsweise einen schienenförmigen Bereich. Das Verbindungselement bzw. dessen schienenförmiger Bereich erstreckt sich vorteilhafterweise schienenförmig in Umfangsrichtung und radialer Richtung des Stators. Die Dicke des Verbindungselements erstreckt sich somit in axialer Richtung des Stators. Jede Statorwicklung ist mit mindestens einem Endbereich eines zu ihr gehörenden Haarnadelleiters mit dem Verbindungselement über die Anschlussbereiche verbunden. Insbesondere ist das Verbindungselement mit dem zweiten Ende jeder Statorwicklung verbunden. Insbesondere weisen die Anschlussbereiche des Verbindungselementes mindestens einen Anschlusssteg auf, der zur flächigen Anbindung genau eines Endbereiches eines Haarnadelleiters dient. Insbesondere können die Anschlussbereiche jeweils genau zwei Anschlussstege umfassen. Die Anschlussbereiche, insbesondere die Anschlussstege, stehen vom Verbindungselement in axialer Richtung hervor, indem sie sich vorzugsweise zunächst in radialer Richtung und nach einer Krümmung in axialer Richtung von dem schienenförmigen Bereich des Verbindungselements hervorstehend erstrecken.

Insbesondere weist das Verbindungselement genauso viele Anschlussstege auf, wie insgesamt Reihenschaltungen in den Statorwicklungen vorhanden sind. Insbesondere umfasst das Verbindungselement sechs Anschlussbereiche jeweils umfassend zwei Anschlussstege, und ist somit an jeweils einen Endbereich von zwölf Haarnadelleitern verbunden. Es führen somit pro Statorwicklung vier Haarnadelleiterendbereiche zum Verbindungselement. Insbesondere bilden diese vier Haarnadelleiterendbereiche ein zweites Ende der jeweiligen Statorwicklung, die vorzugsweise vier Reihenschaltungen von Haarnadelleitern aufweist.

Erfindungsgemäß umfasst das erste Isolationselement taschenförmige Bereiche zur Isolation der Anschlussbereiche des Verbindungselements gegenüber den Stromübertragungselementen. Vorzugsweise sind die Bereiche kastenförmig ausgebildet. Die taschenförmigen Bereiche umschließen die entsprechenden Anschlussbereiche derart, dass die Anschlussbereiche zumindest in axialer Richtung, das heißt in Richtung der Stromübertragungselemente, isoliert sind. Ferner bevorzugt sind die Anschlussbereiche in mindestens vier, vorzugsweise fünf Richtungen isoliert, insbesondere einseitig in axialer Richtung, mindestens einseitig, vorzugsweise beidseitig, in radialer Richtung, und vorzugsweise beidseitig in Umfangsrichtung. Insbesondere weist das erste Isolationselement genau einen taschenförmigen Bereich pro Anschlussbereich des Verbindungselementes auf.

Vorteilhafterweise umfasst das zweite Isolationselement mindestens eine Erhebung zur Verlängerung einer Kriechstrecke zwischen am zweiten Isolationselement angeordneter, in Umfangsrichtung des Stators benachbarter Haarnadelleiter verschiedener Statorwicklungen. Da, wie oben beschrieben, sowohl das Verbindungselement als auch die Stromübertragungselemente mit Endbereichen unterschiedlicher Haarnadelleiter verbunden werden, führen am zweiten Isolationselement Haarnadelleiter unterschiedliche Statorwicklungen vorbei, die in Umfangsrichtung benachbart angeordnet sind. Unter dem Begriff "Kriechstrecke" ist insbesondere die kürzeste Entfernung entlang der Oberfläche des zweiten Isolationselementes zwischen zwei benachbarten Haarnadelleitern verschiedener Statorwicklungen gemeint. Die mindestens eine Erhebung erstreckt sich vorzugsweise radial nach innen und/oder radial nach außen. Insbesondere weist das zweite Isolationselement sowohl radial nach innen erstreckende Erhebungen als auch radial nach außen erstreckende Erhebungen auf. Die Erhebungen erstrecken sich insbesondere stegförmig und/oder trapezförmig in radialer Richtung. Sie verlängern die jeweilige Kriechstrecke zwischen den Haarnadelleitern, zwischen denen diese angeordnet ist, und verhindern somit einen entsprechenden Überschlag.

Das erste und/oder das zweite Isolationselement können Abstandsstege aufweisen, die vorzugsweise Kriechstrecken in radialer Richtung erhöhen. Die Abstandsstege erstrecken sich vorzugsweise in axialer Richtung und stehen von dem schienenförmigen Bereich des ersten und/oder des zweiten Isolationselements hervor. Die Abstandsstege des ersten Isolationselementes sind vorzugsweise derart ausgebildet, dass sie sich in Richtung des zweiten Isolationselementes erstrecken. Die Abstandsstege des zweiten Isolationselementes sind insbesondere derart ausgebildet, dass sie sich in Richtung des ersten Isolationselementes erstrecken.

Insbesondere ist mindestens ein Isolationselement, vorzugsweise das erste und/oder das zweite Isolationselement, dazu ausgebildet, radial und/oder in Umfangsrichtung eine isolierende Wirkung zu erzielen. Beispielsweise kann durch die taschenförmigen Bereiche eine Isolation in radialer Richtung und/oder in Umfangsrichtung und/oder in axialer Richtung bewirkt werden. Durch eine Erhebung kann eine Isolation in Umfangsrichtung erreicht werden. Durch einen Abstandssteg kann eine Isolation in radialer Richtung bewirkt werden.

Insbesondere sind Haarnadelleiter innerhalb einer Statorwicklung mit dem gleichen Schweißverfahren verbunden wie jeweils ein erstes Ende der Statorwicklungen mit einem Stromübertragungselement und/oder wie ein jeweiliges zweites Ende der Statorwicklungen mit dem Verbindungselement. In anderen Worten sind sämtliche zu verbindenden Haarnadelleiterendbereiche, die entweder miteinander oder mit einem Stromübertragungselement oder mit dem Verbindungselement verbunden werden, mit dem gleichen Schweißverfahren hergestellt. Insbesondere ist somit für alle Kontaktierungsstellen im Stator nur ein einziges Schweißverfahren vorgesehen, sodass somit der Herstellungsprozess des Stators wesentlich vereinfacht ist.

In einem weiteren Aspekt umfasst die Erfindung ein Verfahren zur Herstellung eines oben beschriebenen Stators für eine elektrische Maschine, wobei der Stator eine Vielzahl von Haarnadelleitern umfasst, wobei die Haarnadelleiter derart miteinander verbunden werden, dass drei Statorwicklungen ausgebildet sind, wobei der Stator Stromübertragungselemente zum Übertragen von Strom umfasst, wobei jedem Stromübertragungselement eine Statorwicklung zugeordnet ist, wobei der Stator ein Verbindungselement zur Verbindung der Statorwicklung zu einer Schaltung und Isolationselemente umfasst, dadurch gekennzeichnet, dass ein Verbindungselement und die Isolationselemente derart angeordnet werden, dass das Verbindungselement in axialer Richtung des Stators beidseitig durch mindestens ein Isolationselement isoliert ist, wobei mindestens ein erstes Isolationselement an einem ersten axialen Ende des Verbindungselementes zur Isolation gegenüber dem Stromübertragungselement ausgebildet ist, und wobei mindestens ein zweites Isolationselement an einem zweiten axialen Ende des Verbindungselementes zur Isolation gegenüber Endbereichen von Haarnadelleitern ausgebildet ist.

In anderen Worten umfasst das Verfahren die axiale Schichtung von dem zweiten Isolationselement, dem Verbindungselement und dem Isolationselement sowie den Stromübertragungselementen. Insbesondere werden das zur Bildung einer Schaltung vorgesehene Verbindungselement und die Stromübertragungselemente in axialer Richtung unter Zwischenfügen von Isolationselementen zusammengebaut.

Vorteilhafterweise werden die Haarnadelleiter innerhalb einer Statorwicklung mit dem gleichen Schweißverfahren verbunden wie jeweils ein erstes Ende der Statorwicklungen mit einem Stromübertragungselement und/oder wie ein jeweiliges zweites Ende der Statorwicklungen mit dem Verbindungselement. Vorteilhafterweise werden alle elektrischen Verbindungsschritte mit demselben Schweißverfahren durchgeführt.

### Kurze Beschreibung der Zeichnungen

- Figur 1:: eine perspektivische Ansicht eines Verbindungselementes eines erfindungsgemäßen Stators;
- Figur 2:: eine perspektivische Ansicht eines ersten Stromübertragungselementes eines erfindungsgemäßen Stators;
- Figur 3:: eine perspektivische Ansicht eines zweiten Stromübertragungselementes eines erfindungsgemäßen Stators;
- Figur 4:: eine perspektivische Ansicht eines dritten Stromübertragungselementes eines erfindungsgemäßen Stators;
- Figur 5:: eine Explosionsdarstellung eines Wickelkopfbereichs eines erfindungsgemäßen Stators;
- Figur 6: eine perspektivische Ansicht einen erfindungsgemäßen Stators mit einem Wickelkopfbereich der Figur 5;
- Figur 7:: eine perspektivische Ansicht eines Wickelkopfbereichs nach Figur 5;
- Figur 8:: eine perspektivische Ansicht eines Wickelkopfbereichs nach Figur 5;
- Figur 9:: eine radiale Schnittdarstellung eines Wickelkopfbereichs nach Figur 5; und
- Figur 10:: eine radiale Schnittdarstellung eines Wickelkopfbereichs nach Figur 5.

### Bevorzugte Ausführungsformen der Erfindung

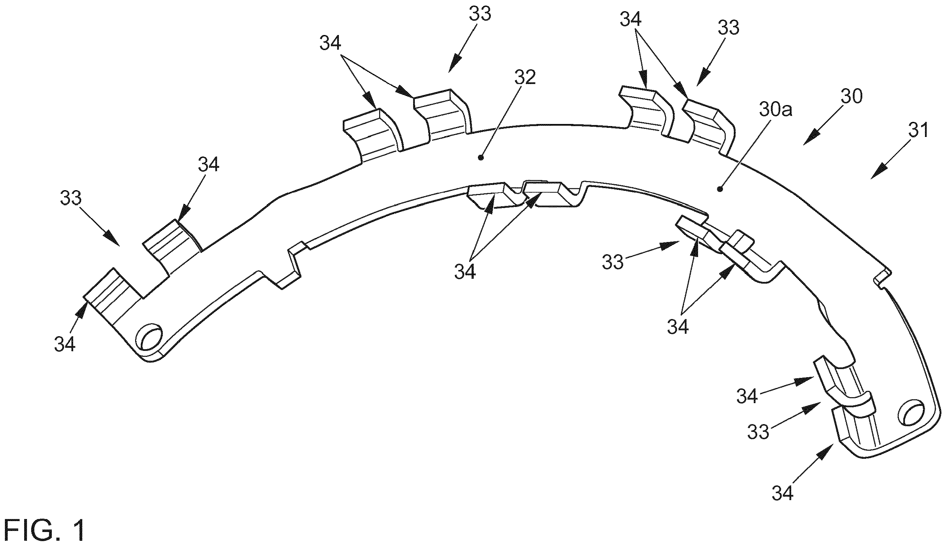

Figur 1 stellt ein Verbindungselement (30) eines erfindungsgemäßen Stators (10) in perspektivischer Ansicht dar.

Das Verbindungselement (30) ist als Kontaktbrücke (31) ausgebildet. Das Verbindungselement (30) umfasst einen schienenförmigen Bereich (32), der sich im eingebauten Zustand des Verbindungselements (30) im Stator (10) in Umfangsrichtung (52) des Stators (10) erstreckt. Die durch den schienenförmigen Bereich (32) gebildete Ebene erstreckt sich im eingebauten Zustand in Umfangsrichtung (52) und radialer Richtung (51) des Stators (10). Die Dicke des schienenförmigen Bereichs (32) erstreckt sich somit in axialer Richtung (50) des Stators (10). In Figur 1 ist das erste axiale Ende (30a) des Verbindungselements (30) zu sehen, das dem ersten Isolationselement (40a) zugewandt angeordnet wird. Das zweite axiale Ende befindet sich auf der in Figur 1 nicht zu sehenden Rückseite des schienenförmigen Bereichs (32).

Das Verbindungselement (30) weist Anschlussbereiche (33) zum Anschließen mindestens eines Endbereiches (13a) eines Haarnadelleiters (13) jeder Statorwicklung auf. Im Detail weist das Verbindungselement (30) sechs Anschlussbereiche (33) auf. Jeder Anschlussbereich (33) umfasst zwei Anschlussstege (34). Die Anschlussbereiche (33) beziehungsweise die Anschlussstege (34) stehen vom schienenförmigen Bereich (32) in axialer Richtung (50) des Stators (10) hervor. Sie erstrecken sich zunächst in radialer Richtung (51) und anschließend nach einer Krümmung in axialer Richtung (50). Jeder Anschlusssteg (34) bildet eine ebene Kontaktfläche zur Kontaktierung mit genau einem Endbereich (13a) eines Haarnadelleiters (13).

Für jede Statorwicklung sind im vorliegenden Fall vier Reihenschaltungen von Haarnadelleitern (13) parallel geschaltet. Zur Erzeugung einer Schaltung führen von jeder Statorwicklung vier Haarnadelleiterendbereiche (13a) zum Verbindungselement (30). Insbesondere dienen jeweils zwei Anschlussbereiche (33) zur Kontaktierung mit einer Statorwicklung. Insgesamt werden somit zwölf Haarnadelleiterendbereiche (13a) zur Herstellung einer vorzugsweisen Sternschaltung mit dem Verbindungselement (30) in den Anschlussbereichen (33) verbunden.

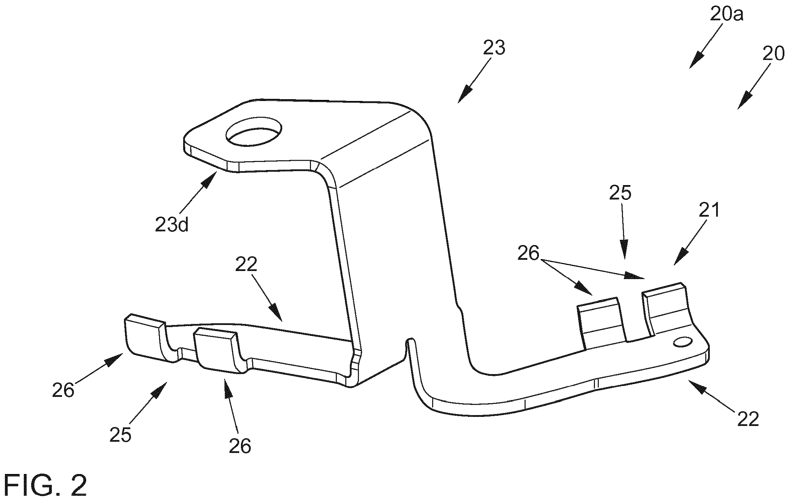

Figur 2 zeigt ein erstes Stromübertragungselement (20a) in perspektivischer Ansicht.

Das Stromübertragungselement (20) ist als Kontaktschiene (21) ausgebildet. Das Stromübertragungselement (20) umfasst zwei schienenförmige Bereiche (22) und einen Abgreifbereich (23). Das erste Stromübertragungselement (20a) ist im eingebauten Zustand im Stator (10) derart angeordnet, die schienenförmigen Bereiche (22) zwei zueinander parallelen Ebenen definieren, die sich senkrecht zu einer axialen Richtung (50) des Stators (10) erstrecken. Der Abgreifbereich (23) weist vorzugsweise eine Anschlussöse (23d) auf. Der Abgreifbereich (23) steht von den schienenförmigen Bereichen (22) hervor. Die schienenförmigen Bereiche (22) erstrecken sich ausgehend vom Anschlussbereich (23) in Umfangsrichtung (52) zu unterschiedlichen Seiten. Der Anschlussbereich (23) steht vom schienenförmigen Bereich (22) zunächst in axialer Richtung (50) hervor, während sich ein freies Ende des Anschlussbereichs (23) parallel zum schienenförmigen Bereich (22) des ersten Stromübertragungselementes (20a) erstreckt.

An die schienenförmigen Bereiche (22) sind sich in axiale Richtung (50) erstreckende Anschlussbereiche (25) angeordnet, die zum Anschließen mindestens eines Endbereichs (13a) eines Haarnadelleiters (13) einer Statorwicklung dienen. Insbesondere umfasst jeder Anschlussbereich zwei Anschlussstege (26), die jeweils genau einen Haarnadelendbereich (13a) eines Haarnadelleiters (13) kontaktieren. Dadurch, dass jede Statorwicklung insbesondere aus vier Reihenschaltungen von Haarnadelleitern (13) parallel geschaltet ist, wird das erste Stromübertragungselement (20a) mit vier Haarnadelendbereichen (13a) verbunden. Es ist somit ein Ende der ersten Statorwicklung mit dem ersten Stromübertragungselement (20a) verbunden, während das jeweilige andere Ende der ersten Statorwicklung mit dem Verbindungselement (30) verbunden ist.

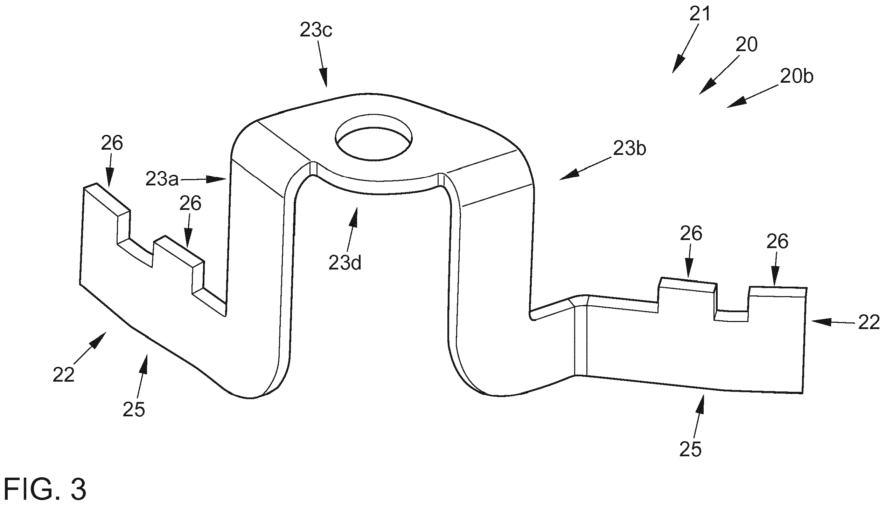

Figur 3 zeigt ein zweites Stromübertragungselement (20b) eines erfindungsgemäßen Stators in perspektivischer Ansicht (10).

Das zweite Stromübertragungselement (20b) ausgebildet als Kontaktschiene (21) weist zwei schienenförmige Bereiche (22) auf. Die schienenförmigen Bereiche definieren eine Ebene, die sich in axialer Richtung (50) und Umfangsrichtung (52) des Stators erstreckt. Ferner weist das zweite Stromübertragungselement (20b) einen Abgreifbereich (23) zum Abgreifen einer an dem Stromübertragungselement (20) anliegenden Spannung auf.

Der Abgreifbereich (23) ragt von den schienenförmigen Bereichen (22) in axialer Richtung (50) des Stators (10) hervor. Insbesondere umfasst der Abgreifbereich (23) einen ersten Schenkel (23a) und einen zweiten Schenkel (23b), wobei sich je ein schienenförmiger Bereich (22) an einem Schenkel anschließt. Zwischen den Schenkeln (23a, 23b) befindet sich ein Übergangsbereich (23c), in dem eine Anschlussöse (23d) ausgebildet ist zum Abgreifen der jeweiligen Phase. Es ist ein Ende der zweiten Statorwicklung mit dem zweiten Stromübertragungselement (20b) verbunden, während das jeweilige andere Ende der zweiten Statorwicklung mit dem Verbindungselement (30) verbunden ist.

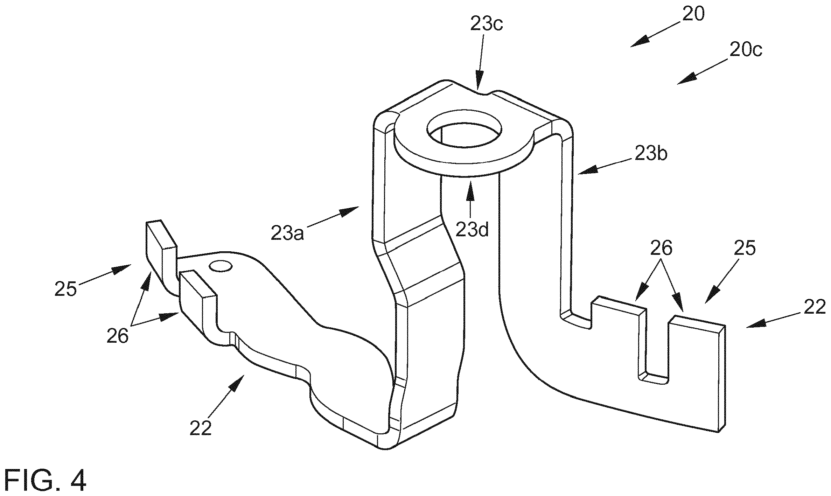

Figur 4 zeigt eine perspektivische Ansicht eines dritten Stromübertragungselementes (20c) umfassend zwei schienenförmigen Bereiche (22) und einen Abgreifbereich (23), wobei der Abgreifbereich einen ersten Schenkel (23a), einen zweiten Schenkel (23b) und einen dazwischenliegenden Übergangsbereich (23c) aufweist, wobei sich der Übergangsbereich (23c) senkrecht zu einer axialen Richtung (50) des Stators (10) erstreckt.

Die schienenförmigen Bereiche erstrecken sich jeweils an einem Schenkel und senkrecht zu einer axialen Richtung (50) des Stators (10), wobei jeder schienenförmige Bereich (22) jeweils einen Anschlussbereich (25) mit jeweils zwei Anschlussstegen (26) umfasst. Es ist ein Ende der dritten Statorwicklung mit dem dritten Stromübertragungselement (20c) verbunden, während das jeweilige andere Ende der dritten Statorwicklung mit dem Verbindungselement (30) verbunden ist.

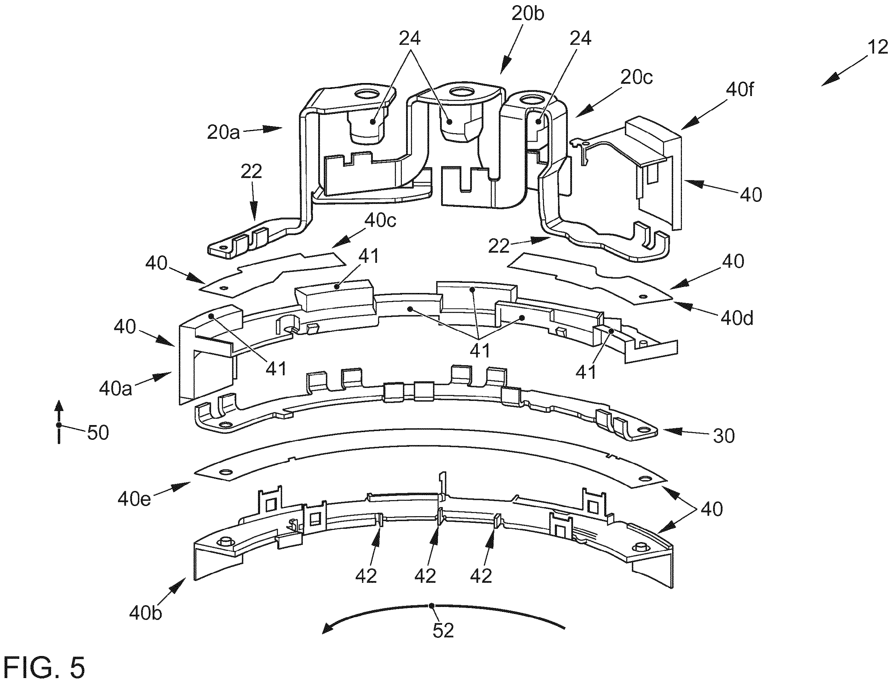

In Figur 5 ist eine Explosionsdarstellung eines Wickelkopfbereichs (12) eines erfindungsgemäßen Stators (10) gezeigt.

Dargestellt sind das in Figur 1 beschriebene Verbindungselement (30) sowie die in den Figuren 2 bis 4 beschriebenen Stromübertragungselemente (20). Bei den Stromübertragungselementen (20) sind Gewindebuchsen (24) an den Abgreifbereichen (23) angeordnet.

Ferner umfasst der Stator (10) mehrere Isolationselemente (40). Ein erstes Isolationselement (40a) dient zur Isolation des Verbindungselementes (30) gegenüber den Stromübertragungselementen (20). Das erste Isolationselement (40a) ist schienenförmig ausgebildet. Zur weiteren Isolation zwischen dem Verbindungselement (30) und den Stromübertragungselementen (20) sind ferner ein drittes Isolationselement (40c) und ein viertes Isolationselement (40d) zwischen dem ersten Isolationselement (40a) und den Stromübertragungselementen (20) angeordnet. Im Detail ist das dritte Isolationselement (40bc derart angeordnet, dass ein schienenförmiger Bereich (22) des ersten Stromübertragungselementes (20a) auf diesem aufliegt. Ferner ist das vierte Isolationselement (40d) derart angeordnet, dass ein schienenförmiger Bereich (22) des dritten Stromübertragungselementes (20c) auf diesem aufliegt.

Ferner umfasst der Stator ein zweites Isolationselement (40b), das dazu dient, das Verbindungselement (30) gegenüber Enden (13a) von Haarnadelleitern (13) des Wickelkörpers (11) zu isolieren. Dabei kann zwischen dem zweiten Isolationselement (40b) und dem Verbindungselement (30) ein fünftes Isolationselement (40e) ausgebildet sein.

Insbesondere sind das fünfte Isolationselement (40e), das dritte Isolationselement (40c) und das vierte Isolationselement (40d) plattenförmig ausgebildet und weisen somit keine Erhebungen, bis auf deren Dicke, in axialer Richtung (50) des Stators auf.

Das erste Isolationselement (40a) erstreckt sich schienenförmig in Umfangsrichtung (52) des Stators (10). Es deckt dabei jedoch nur einen Winkelsektor des Umfangs ab. Das erste Isolationselement (40a) weist taschenförmige Bereiche (41) auf, die jeweils über einen Anschlussbereich (33) des Verbindungselementes (30) gestülpt werden. Die taschenförmigen Bereiche (41) dienen somit einer Isolation der Anschlussbereiche (33) gegenüber den Stromübertragungselementen (20). Insgesamt weist das erste Isolationselement (40a) einen taschenförmigen Bereich (41) für jeden Anschlussbereich (33) des Verbindungselementes (30) auf.

Das zweite Isolationselement (40b) weist insbesondere an dessen radial inneren und radial äußeren Oberfläche Erhebungen (42) auf, die dazu dienen, Kriechstrecken (43) zwischen benachbarten Haarnadelleiterendbereichen (13a) unterschiedlicher Statorwicklungen zu erhöhen und somit einen Überschlag zu vermeiden.

Ferner weist der Stator (10) ein sechstes Isolationselement (40f) auf, das ebenfalls als taschenförmiger Bereich für einen Anschlussbereich (25) des dritten Stromübertragungselementes (20c) ausgebildet ist.

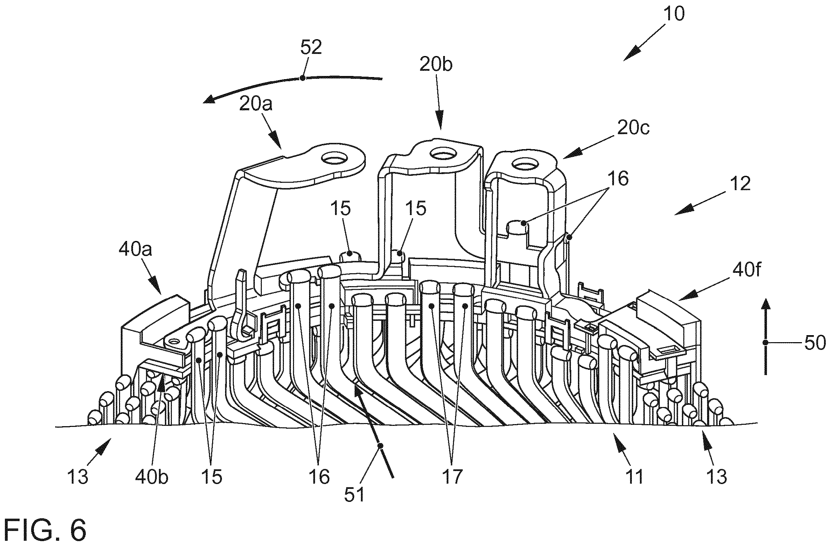

In Figur 6 ist eine perspektivische Ansicht eines erfindungsgemäßen Stators (10) mit einem Wickelkopfbereich (12) der Figur 5 gezeigt.

Die in Figur 5 gezeigten Komponenten des Stators (10) sind an einem stirnseitigen Ende des Wickelkörpers (11) des Stators (10) angeordnet. Haarnadelleiter (13) einer ersten Statorwicklung sind mit dem ersten Stromübertragungselement (20a) verbunden. Diese vier Haarnadelleiter (15) der ersten Statorwicklung bilden aufgrund der Parallelschaltung von vier Reihenschaltungen ein erstes Ende der ersten Statorwicklung. Das entsprechende zweite Ende der ersten Statorwicklung ist mit dem Verbindungselement (30) über die entsprechenden Anschlussbereiche (33) verbunden.

Analoges gilt für das zweite Stromübertragungselement (20b) und das dritte Stromübertragungselement (20c). Das zweite Stromübertragungselement (20b) ist mit vier Haarnadelleitern (16) der zweiten Statorwicklung über dessen Anschlussbereich (25) verbunden, während das dritte Stromübertragungselement (20c) mit entsprechenden Haarnadelleitern (17) der dritten Statorwicklung verbunden ist. Das entsprechende andere Ende der Statorwicklungen ist wiederum mit einem Verbindungselement (30) über dessen Anschlussbereiche (33) verbunden. Dabei stellt das Verbindungselement (30) eine Sternschaltung her.

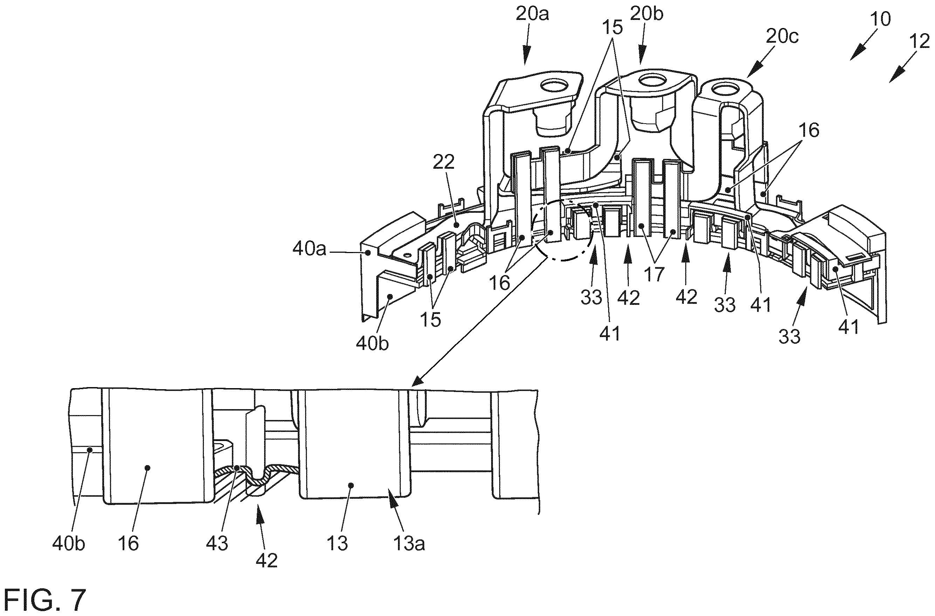

In Figur 7 ist eine perspektivische Ansicht auf einen Wickelkopfbereich (12) nach Figur 5 gezeigt, und zwar derart, dass dessen radiale Innenseite zu sehen ist. In einer vergrößerten Darstellung sind an der radialen Innenseite des zweiten Isolationselementes (40b) radial nach innen vorstehende Erhebungen (42) gezeigt, die zwischen Haarnadelleiterendbereichen (13a) angeordnet sind, die benachbart sind, jedoch zu unterschiedlichen Statorwicklungen gehören. In der Figur sind Erhebungen (42) gezeigt zwischen einem Haarnadelleiter (16) der zweiten Statorwicklung, in anderen Worten einem Haarnadelleiterendbereich (13a), der mit dem zweiten Stromübertragungselement (20b) verbunden ist, und einem Haarnadelleiterendbereich (13a), der mit dem Verbindungselement (30) verbunden ist. Ferner ist zwei Erhebungen (42) zu sehen zwischen je einem Haarnadelleiterendbereich (13a), der mit dem Verbindungselement (30) verbunden ist, und einem Haarnadelleiter (17), der mit dem dritten Stromübertragungselement (20c) verbunden ist.

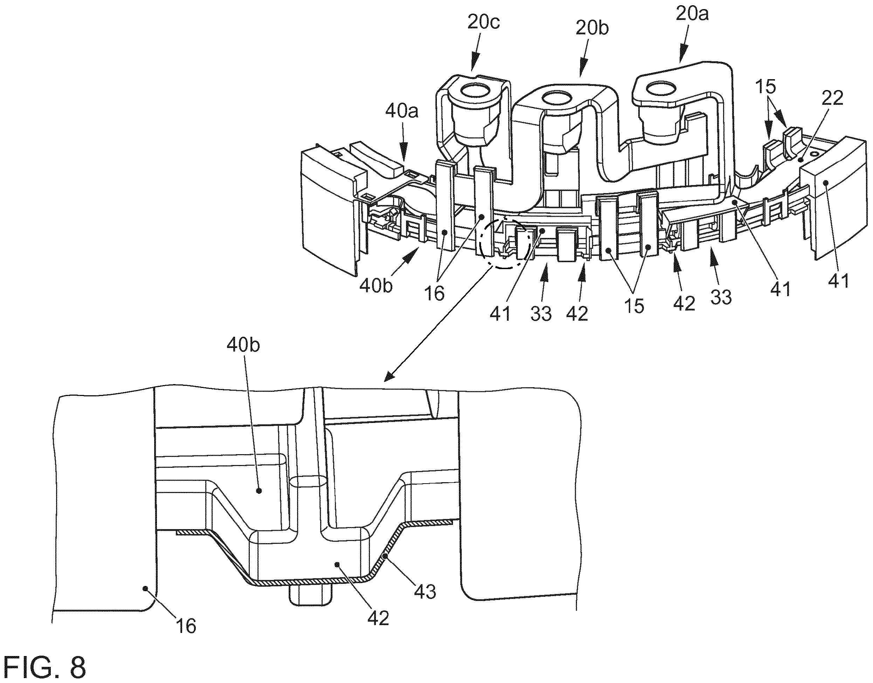

In Figur 8 ist eine perspektivische Ansicht auf einen Wickelkopfbereich (12) nach Figur 5 gezeigt, und zwar derart, dass dessen radiale Außenseite zu sehen ist. Es sind radial nach außen vorstehende Erhebungen (42) des zweiten Isolationselementes (40b) gezeigt, die zwischen benachbarten Haarnadelleiterendbereichen (13a) unterschiedlicher Statorwicklungen angeordnet sind.

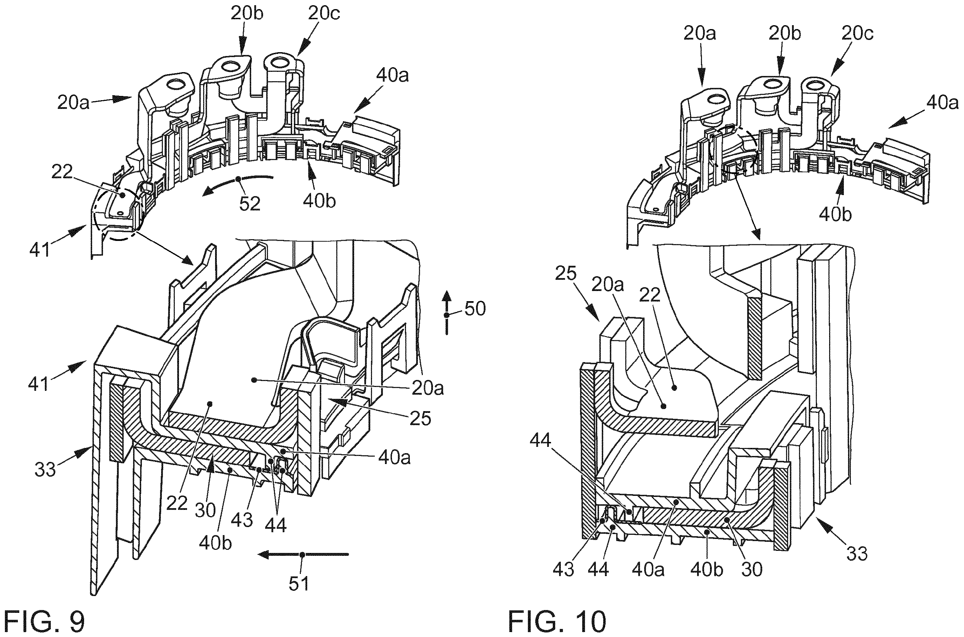

In Figur 9 ist eine radiale Schnittdarstellung eines Wickelkopfbereichs (12) nach Figur 5 gezeigt. In der vergrößerten Darstellung der Figur ist insbesondere ein taschenförmiger Bereich (41) des ersten Isolationselementes (40a) gezeigt, der über einen Anschlussbereich (33) des Verbindungselementes (30) gestülpt ist und diesen insbesondere zu fünf Seiten isoliert. Insbesondere kann das erste Isolationselement (40a) und das zweite Isolationselement (40b) in axiale Richtung (50) hervorstehende Abstandsstege (44) aufweisen, die dazu dienen, eine Kriechstrecke (43) zwischen dem Verbindungselement (30) und Haarnadelleiterendbereichen (13a) zu erhöhen. Dafür stehen die Abstandsstege (44) des ersten Isolationselementes (40a) insbesondere in Richtung des zweiten Isolationselementes (40b) hervor, während entsprechende Abstandsstege (44) des zweiten Isolationselementes (40b) insbesondere in Richtung des ersten Isolationselementes (40a) hervorstehen.

Figur 10 zeigt eine radiale Schnittdarstellung eines Wickelkopfbereichs (12) nach Figur 5, in der entsprechend der Figur 9 zu sehen ist, wie anhand von entsprechenden Abstandsstegen (44) des ersten Isolationselementes (40a) und des zweiten Isolationselementes (40b) Kriechstrecken (43) zwischen dem Verbindungselement (30) und Haarnadelleiterendbereichen (13a), die zu Stromübertragungselementen (20) führen, verlängert werden.

### Bezugszeichenliste

- 10: Stator
- 11: Wickelkörper
- 12: Wickelkopfbereich
- 13: Haarnadelleiter
- 13a: Endbereich eines Haarnadelleiters
- 15: Haarnadelleiter der ersten Statorwicklung
- 16: Haarnadelleiter der zweiten Statorwicklung
- 17: Haarnadelleiter der dritten Statorwicklung

- 20: Stromübertragungselement
- 20a: erstes Stromübertragungselement
- 20b: zweites Stromübertragungselement
- 20c: drittes Stromübertragungselement
- 21: Kontaktschiene
- 22: schienenförmiger Bereich
- 23: Abgreifbereich
- 23a: erster Schenkel
- 23b: zweiter Schenkel
- 23c: Übergangsbereich
- 23d: Anschlussöse
- 24: Gewindebuchse
- 25: Anschlussbereich
- 26: Anschlusssteg

- 30: Verbindungselement
- 30a: erstes axiales Ende
- 31: Kontaktbrücke
- 32: schienenförmiger Bereich
- 33: Anschlussbereich
- 34: Anschlusssteg

- 40: Isolationselement
- 40a: erstes Isolationselement
- 40b: zweites Isolationselement
- 40c: drittes Isolationselement
- 40d: viertes Isolationselement
- 40e: fünftes Isolationselement
- 40f: sechstes Isolationselement
- 41: taschenförmiger Bereich
- 42: Erhebung
- 43: Kriechstrecke
- 44: Abstandssteg

- 50: axiale Richtung
- 51: radiale Richtung
- 52: Umfangsrichtung

## Patentansprüche

1. Stator (10) für eine elektrische Maschine,
wobei der Stator (10) eine Vielzahl von Haarnadelleitern (13) umfasst,
wobei die Haarnadelleiter (13) derart miteinander verbunden sind, dass drei Statorwicklungen ausgebildet sind,
wobei der Stator (10) Stromübertragungselemente (20) zum Übertragen von Strom umfasst,
wobei jedem Stromübertragungselement (20) eine Statorwicklung zugeordnet ist,
wobei der Stator (10) ein Verbindungselement (30) zur Verbindung der Statorwicklungen zu einer Schaltung umfasst,
wobei der Stator (10) Isolationselemente (40) aufweist,
wobei das Verbindungselement (30) in axialer Richtung (50) des Stators (10) beidseitig durch mindestens ein Isolationselement (40) isoliert ist,
wobei mindestens ein erstes Isolationselement (40a) an einem ersten axialen Ende (30a) des Verbindungselementes (30) zur Isolation gegenüber den Stromübertragungselementen (20) ausgebildet ist, und
wobei mindestens ein zweites Isolationselement (40b) an einem zweiten axialen Ende des Verbindungselementes (30) zur Isolation gegenüber Endbereichen (13a) von Haarnadeleitern (13) ausgebildet ist,
wobei das Verbindungselement (30) sich in axialer Richtung (50) erstreckende Anschlussbereiche (33) zum Anschließen mindestens eines Endbereiches (13a) eines Haarnadelleiters (13) jeder Statorwicklung aufweist,
**dadurch gekennzeichnet dass**
das erste Isolationselement (40a) taschenförmige Bereiche (41) zur Isolation der Anschlussbereiche (33) des Verbindungselementes (30) gegenüber den Stromübertragungselementen (20) aufweist, wobei die taschenförmige Bereiche (41) über die Anschlussbereiche (33) des Verbindungselementes (30) gestülpt sind.

2. Stator (10) nach Anspruch 1,
**dadurch gekennzeichnet, dass**
das mindestens ein Isolationselement (40) schienenförmig ausgebildet ist und sich in Umfangsrichtung (52) des Stators (10) erstreckt.

3. Stator (10) nach einem der Ansprüche 1 oder 2,
**dadurch gekennzeichnet, dass**
die Stromübertragungselemente (20) als Kontaktschienen (21) ausgebildet sind, wobei die Stromübertragungselemente (20) jeweils mindestens einen schienenförmigen Bereich (22) und einen Abgreifbereich (23) zum Abgreifen einer an dem Stromübertragungselement anliegenden Spannung aufweisen.

4. Stator (10) nach einem der vorherigen Ansprüche,
**dadurch gekennzeichnet, dass**
die Stromübertragungselemente (20) sich in axialer Richtung (50) erstreckende Anschlussbereiche (25) zum Anschließen mindestens eines Endbereiches (13a) eines Haarnadelleiters (13) einer Statorwicklung aufweisen.

5. Stator (10) nach einem der vorherigen Ansprüche,
**dadurch gekennzeichnet, dass**
das zweite Isolationselement (40b) mindestens eine Erhebung (42) zur Verlängerung einer Kriechstrecke (43) zwischen am zweiten Isolationselement (40b) angeordneter, in Umfangsrichtung (52) des Stators (10) benachbarter Haarnadelleiter (13) verschiedener Statorwicklungen aufweist.

6. Stator (10) nach einem der vorherigen Ansprüche,
**dadurch gekennzeichnet, dass**
die Haarnadelleiter (13) innerhalb einer Statorwicklung mit dem gleichen Schweißverfahren verbunden sind wie jeweils ein erstes Ende der Statorwicklungen mit einem Stromübertragungselement (20) und/oder wie ein jeweiliges zweites Ende der Statorwicklungen mit dem Verbindungselement (30).

7. Verfahren zur Herstellung eines Stators (10) für eine elektrische Maschine nach einem der Ansprüche 1 bis 6,
wobei der Stator (10) eine Vielzahl von Haarnadelleitern (13) umfasst,
wobei die Haarnadelleiter (13) derart miteinander verbunden werden, dass drei Statorwicklungen ausgebildet sind,
wobei der Stator (10) Stromübertragungselemente (20) zum Übertragen von Strom umfasst,
wobei jedem Stromübertragungselement (20) eine Statorwicklung zugeordnet ist,
wobei der Stator (10) ein Verbindungselement (30) zur Verbindung der Statorwicklungen zu einer Schaltung umfasst,
wobei der Stator (10) Isolationselemente (40) umfasst,
**dadurch gekennzeichnet, dass**
das Verbindungselement (30) und die Isolationselemente (40) derart angeordnet werden, dass das Verbindungselement (30) in axialer Richtung (50) des Stators (10) beidseitig durch mindestens ein Isolationselement (40) isoliert ist,
wobei mindestens ein erstes Isolationselement (40a) an einem ersten axialen Ende (30a) des Verbindungselementes (30) zur Isolation gegenüber den Stromübertragungselementen (20) ausgebildet ist,
und wobei mindestens ein zweites Isolationselement (40b) an einem zweiten axialen Ende des Verbindungselementes (30) zur Isolation gegenüber Endbereichen (13a) von Haarnadeleitern (13) ausgebildet ist.

8. Verfahren nach Anspruch 7,
**dadurch gekennzeichnet, dass**
die Haarnadelleiter (13) innerhalb einer Statorwicklung mit dem gleichen Schweißverfahren verbunden werden wie jeweils ein erstes Ende der Statorwicklungen mit einem Stromübertragungselement (20) und/oder wie ein jeweiliges zweites Ende der Statorwicklungen mit dem Verbindungselement (30).

## Claims

1. Stator (10) for an electric machine,
wherein the stator (10) comprises a multiplicity of hairpin conductors (13),
wherein the hairpin conductors (13) are connected to one another such that three stator windings are formed,
wherein the stator (10) comprises current transfer elements (20) for transferring current,
wherein one stator winding is assigned to each current transfer element (20),
wherein the stator (10) comprises a connecting element (30) for connecting the stator windings to form a circuit,
wherein the stator (10) has insulating elements (40),
wherein the connecting element (30) is insulated to both sides in an axial direction (50) of the stator (10) by at least one insulating element (40),
wherein at least one first insulating element (40a) at a first axial end (30a) of the connecting element (30) is designed for insulation with respect to the current transfer elements (20), and
wherein at least one second insulating element (40b) at a second axial end of the connecting element (30) is designed for insulation with respect to end regions (13a) of hairpin conductors (13),
wherein the connecting element (30) has connection regions (33) which extend in the axial direction (50) and which serve for the connection of at least one end region (13a) of a hairpin conductor (13) of each stator winding,
**characterized in that**
the first insulating element (40a) has pocket-like regions (41) for insulation of the connection regions (33) of the connecting element (30) with respect to the current transfer elements (20), wherein the pocket-like regions (41) are placed over the connection regions (33) of the connecting element (30).

2. Stator (10) according to Claim 1,
**characterized in that**
the at least one insulating element (40) is formed in the manner of a rail and extends in a circumferential direction (52) of the stator (10).

3. Stator (10) according to either of Claims 1 and 2, **characterized in that**
the current transfer elements (20) are formed as contact rails (21),
wherein the current transfer elements (20) have in each case at least one rail-like region (22) and one pick-off region (23) for the pick-off of a voltage prevailing at the current transfer element.

4. Stator (10) according to any one of the preceding claims,
**characterized in that**
the current transfer elements (20) have connection regions (25) which extend in the axial direction (50) and which serve the connection of at least one end region (13a) of a hairpin conductor (13) of a stator winding.

5. Stator (10) according to any one of the preceding claims,
**characterized in that**
the second insulating element (40b) has at least one elevation (42) for lengthening a creepage distance (43) between hairpin conductors (13), which are arranged on the second insulating element (40b) and which are adjacent in the circumferential direction (52) of the stator (10), of different stator windings.

6. Stator (10) according to any one of the preceding claims,
**characterized in that**
the hairpin conductors (13) within a stator winding are connected by means of the same welding process as in each case one first end of the stator windings is connected to a current transfer element (20) and/or as a respective second end of the stator windings is connected to the connecting element (30) .

7. Method for producing a stator (10) for an electric machine according to any one of Claims 1 to 6, wherein the stator (10) comprises a multiplicity of hairpin conductors (13),
wherein the hairpin conductors (13) are connected to one another such that three stator windings are formed,
wherein the stator (10) comprises current transfer elements (20) for transferring current,
wherein one stator winding is assigned to each current transfer element (20),
wherein the stator (10) comprises a connecting element (30) for connecting the stator windings to form a circuit,
wherein the stator (10) has insulating elements (40),
**characterized in that**
the connecting element (30) and the insulating elements (40) are arranged such that the connecting element (30) is insulated to both sides in the axial direction (50) of the stator (10) by at least one insulating element (40),
wherein at least one first insulating element (40a) at a first axial end (30a) of the connecting element (30) is designed for insulation with respect to the current transfer elements (20),
and wherein at least one second insulating element (40b) at a second axial end of the connecting element (30) is designed for insulation with respect to end regions (13a) of hairpin conductors (13).

8. Method according to Claim 7,
**characterized in that**
the hairpin conductors (13) within a stator winding are connected by means of the same welding process as in each case one first end of the stator windings is connected to a current transfer element (20) and/or as a respective second end of the stator windings is connected to the connecting element (30) .

## Revendications

1. Stator (10) pour une machine électrique,
dans lequel le stator (10) comprend une pluralité de conducteurs en épingle à cheveux (13),
dans lequel les conducteurs en épingle à cheveux (13) sont reliés les uns aux autres de manière à ce que trois enroulements de stator soient formés,
dans lequel le stator (10) comprend des éléments de transmission électrique (20) pour transmettre du courant,
dans lequel on associe un enroulement de stator à chaque élément de transmission électrique (20),
dans lequel le stator (10) comprend un élément de raccordement (30) pour raccorder les enroulements de stator à un circuit,
dans lequel le stator (10) présente des éléments isolants (40),
dans lequel l'élément de raccordement (30) est isolé des deux côtés en direction axiale (50) du stator (10) par au moins un élément isolant (40),
dans lequel au moins un premier élément isolant (40a) est réalisé à une première extrémité axiale (30a) de l'élément de raccordement (30) pour l'isolation par rapport aux éléments de transmission électrique (20), et
dans lequel au moins un deuxième élément isolant (40b) est réalisé à une deuxième extrémité axiale de l'élément de raccordement (30) pour l'isolation par rapport à des zones d'extrémité (13a) de conducteurs en épingle à cheveux (13),
dans lequel l'élément de raccordement (30) présente des zones de raccordement (33) s'étendant en direction axiale (50) pour raccorder au moins une zone d'extrémité (13a) d'un conducteur en épingle à cheveux (13) de chaque enroulement de stator,
**caractérisé en ce que**
le premier élément isolant (40a) présente des zones en forme de poche (41) pour l'isolation des zones de raccordement (33) de l'élément de raccordement (30) par rapport aux éléments de transmission électrique (20), dans lequel les zones en forme de poche (41) coiffent les zones de raccordement (33) de l'élément de raccordement (30).

2. Stator (10) selon la revendication 1,
**caractérisé en ce que**
l'au moins un élément isolant (40) est réalisé en forme de rail et s'étend en direction circonférentielle (52) du stator (10).

3. Stator (10) selon l'une des revendications 1 et 2,
**caractérisé en ce que**
les éléments de transmission électrique (20) sont réalisés en tant que rails de contact (21), dans lequel les éléments de transmission électrique (20) présentent respectivement au moins une zone en forme de rail (22) et une zone de prise (23) pour prendre une tension appliquée à l'élément de transmission électrique.

4. Stator (10) selon l'une des revendications précédentes,
**caractérisé en ce que**
les éléments de transmission électrique (20) présentent des zones de raccordement (25) s'étendant en direction axiale (50) pour raccorder au moins une zone d'extrémité (13a) d'un conducteur en épingle à cheveux (13) d'un enroulement de stator.

5. Stator (10) selon l'une des revendications précédentes,
**caractérisé en ce que**
le deuxième élément isolant (40b) présente au moins une élévation (42) pour prolonger une ligne de fuite (43) entre des conducteurs en épingle à cheveux (13) disposés au niveau du deuxième élément isolant (40b), voisins en direction circonférentielle (52) du stator (10), de différents enroulements de stator.

6. Stator (10) selon l'une des revendications précédentes,
**caractérisé en ce que**
les conducteurs en épingle à cheveux (13) à l'intérieur d'un enroulement de stator sont reliés avec le même procédé de soudage que respectivement une première extrémité des enroulements de stator avec un élément de transmission électrique (20) et/ou une deuxième extrémité respective des enroulements de stator avec l'élément de raccordement (30).

7. Procédé pour la fabrication d'un stator (10) pour une machine électrique selon l'une des revendications 1 à 6,
dans lequel le stator (10) comprend une pluralité de conducteurs en épingle à cheveux (13),
dans lequel les conducteurs en épingle à cheveux (13) sont reliés les uns aux autres de manière à ce que trois enroulements de stator soient formés,
dans lequel le stator (10) comprend des éléments de transmission électrique (20) pour transmettre du courant,
dans lequel on associe un enroulement de stator à chaque élément de transmission électrique (20),
dans lequel le stator (10) comprend un élément de raccordement (30) pour raccorder les enroulements de stator à un circuit,
dans lequel le stator (10) présente des éléments isolants (40),
**caractérisé en ce que**
l'élément de raccordement (30) et les éléments isolants (40) sont agencés de manière à ce que l'élément de raccordement (30) est isolé des deux côtés en direction axiale (50) du stator (10) par au moins un élément isolant (40),
dans lequel au moins un premier élément isolant (40a) est réalisé à une première extrémité axiale (30a) de l'élément de raccordement (30) pour l'isolation par rapport aux éléments de transmission électrique (20),
et dans lequel au moins un deuxième élément isolant (40b) est réalisé à une deuxième extrémité axiale de l'élément de raccordement (30) pour l'isolation par rapport à des zones d'extrémité (13a) de conducteurs en épingle à cheveux (13).

8. Procédé selon la revendication 7,
**caractérisé en ce que**
les conducteurs en épingle à cheveux (13) à l'intérieur d'un enroulement de stator sont reliés avec le même procédé de soudage que respectivement une première extrémité des enroulements de stator avec un élément de transmission électrique (20) et/ou une deuxième extrémité respective des enroulements de stator avec l'élément de raccordement (30).
